# EUROPÄISCHE PATENTANMELDUNG

(11) **EP 1 731 743 A2**
(43) Veröffentlichungstag der Anmeldung: **13.12.2006**
(21) Anmeldenummer: 05026049.6
(22) Anmeldetag: 30.11.2005
(51) Int. Cl.: F02D 41/14, F02D 41/40, F02D 41/22

(54) **Verfahren zur Regelung eines Einspritzsystems und Einspritzsystem mit Partikelsensorik für Brennkraftmaschinen**

(30) Priorität: 10.06.2005 DE 102005026862; 10.11.2005 DE 102005053664
(71) Anmelder: Hille, Frank, 02727 Neugersdorf (DE)
(72) Erfinder: Hille, Frank, 02727 Neugersdorf (DE)
(74) Vertreter: Weissfloh, Ingo

(57) **Zusammenfassung**

Das Verfahren, und das Einspritzsystem für Brennkraftmaschinen, insbesondere Dieselmotoren, mit Partikelsensorik erlaubt es durch Trübungsmessung mit einem Sensor in den Abgaskanälen der einzelnen Zylinder, dass die Motorsteuerung bei Überschreiten des zulässigen Maximalwertes über die Einspritzpumpe die eingespritzte Kraftstoffmenge soweit reduziert und/oder weitere Verbrennungsbedingungen, insbesondere der Verbrennungsverlauf, optimiert werden bis der Rußausstoß den von der Motorsteuerung vorgegebenen Maximalwert unterschreitet. Weiter ist eine Kalibrierung des Sensors und eine Funktionskontrolle über das Kombiinstrument vorgesehen.

## Beschreibung

Verfahren zur Regelung eines Einspritzsystems für Brennkraftmaschinen und ein Einspritzsystem mit Partikelsensorik für Brennkraftmaschinen, insbesondere für Dieselmotoren.

Steuerungen zur Einspritzmenge bei Dieselmotoren sind in den verschiedensten Ausführungen bekannt. Bei modernen, elektronisch gesteuerten Common-Rail bzw. Pumpe-Düse Dieselmotoren erfolgt die Steuerung der Einspritzmenge temperatur-, last- und drehzahlabhängig. Bei Dieselmotoren erfolgt in der Regel keine Überwachung der Abgaszusammensetzung. Um die bei bestimmten Betriebszuständen besonders stark auftretenden Rußemissionen zu reduzieren, besteht die Möglichkeit, durch in den Abgasstrom angeordnete Partikelfilter die Rußpartikel zu entfernen. Die Kosten für Partikelfilter sind nicht unerheblich, erhöhen den Kraftstoffverbrauch, sind wartungsintensiv und mit dem Anfall von Sondermüll verbunden.

Bei Benzinmotoren wird über Lamdasonden der Luftüberschuss erfasst und entsprechend der Abweichung vom Sollwert 1 die Kraftstoffmenge reduziert bzw. erhöht. Für Dieselmotoren ist die Entstehung von Rußpartikeln ein Indiz für die Qualität der Verbrennung. Rußpartikel entstehen bei unvollständiger Verbrennung des Kraftstoffes.

In der DE 101 45 649 A1 wird eine Dieselmotorsteuerung beschrieben bei der die aus der Verbrennungsstrahlung gefilterten Spektralbereiche von Ruß- und OH-Strahlung ausgewertet werden.

In der DE 197 40 608 C2 wird eine Dieselmotorsteuerung beschrieben, welche aus dem Druckverlaufsmuster die kraftstoffeinspritzende Kenngröße ableitet. Diese erfolgt bereits zylinderselektiv.

In der DE 39 06 083 C2 wird eine Dieselmotorsteuerung beschrieben, welche mit einem elektronischen Basisregler, dem Signale von Gebern und Sensoren zur Erfassung von Betriebsgrößen des Motors zugeführt sind und dessen Ausgangssignal zum Antrieb eines Stellgliedes für die dem Motor zugeführte Kraftstoffmenge herangezogen ist, arbeitet. Diese Einrichtung besitzt einen Abgassensor mit einem Sollwertspeicher für den maximal zulässigen Rußwert, einen Speicher für bezüglich des Zeitpunktes des Sollwertvergleiches um die Messtotzeit des Abgassensors zurückliegende Werte eines Arbeitspunktvektors, der aus Werten von Betriebsgrößen besteht, ein adaptives Kernfeld, in dem in Abhängigkeit von dem Arbeitspunktvektor ein maximal zulässiges Ansteuersignal festgelegt ist, eine Minimalwertauswahlstufe zur Ansteuerung des Stellgliedes, welcher das Ansteuersignal des adaptiven Kennfeldes sowie das im Basisregler das berechnete Ansteuersignal zugeführt sind und einen Begrenzungsregler, dem der maximal zulässige Abgaswert des Sollwertspeichers, der Abgaswert sowie ein Statussignal der Minimalwertauswahlstufe zugeführt sind und dessen Ausgangssignal als Korrektursignal dem Eingang des adaptiven Kennfeldes zugeführt ist.

Nachteilig bei diesen Verfahren ist, dass Messergebnisse mit Zeitverzug vorliegen, die Auswertung der Messergebnisse kompliziert und eine Zeitkorrektur erforderlich ist. Eine Fehlermeldung über das Kontrollinstrument und den Fehlerspeicher ist nicht vorgesehen und ermöglicht keine Auswertung von Fehlfunktionen. Auch ist auf diese Weise kein Rückschluss auf den Zustand der Einspritzdüsen/Injektoren möglich.

Der Erfindung liegt die Aufgabe zugrunde, bei Brennkraftmaschinen, insbesondere bei Zweistoff- oder Mehrstoffdieselmotoren den Rußpartikelausstoß im Abgas zu erfassen und durch Vergleich mit dem zulässigen, in der Motorsteuerung eingestellten Maximalwert der Abgastrübung bei Überschreiten die Einspritzmenge des betreffenden Zylinders soweit zu reduzieren bzw. verbrennungsunterstützende Maßnahmen einzuleiten, bis der vorgegebene Wert eingehalten wird und somit eine Rauchdichteregelung und -überwachung zu ermöglichen.

Das Einspritzsystem mit Partikelsensorik für Brennkraftmaschinen, insbesondere Dieselmotoren, zeichnet sich dadurch aus, dass ein im Abgaskanal angeordneter Sensor die Trübung des Abgasstromes erfasst. Durch Wandlung in eine elektrische Größe wird der Wert von der Motorsteuerung mit dem zulässigen Maximalwert verglichen und bei Überschreiten die betreffende Einspritzmenge soweit verringert, bis der Maximalwert eingehalten wird. Die Reduzierung der Einspritzmenge kann ergänzt bzw. ersetzt werden durch die Ansteuerung anderer Aggregate, die die Verbrennungsbedingungen so beeinflussen, dass weniger Rußpartikel entstehen, welche aus unvollständiger Verbrennung des Kraftstoffs resultieren. Die Verbrennungsbedingungen können durch eine Änderung, insbesondere eine Erhöhung des Ladedrucks des Turboladers bzw. des Kompressors, verbessert werden. Ebenso ist durch zusätzliche Frischluft- oder Sauerstoffeinblasung in den Brennraum eine vollständigere und somit bessere Verbrennung erzielbar. Durch Umschaltung des Verbrennungsluftstromes über eine Molekularfiltereinheit kann der Stickstoffanteil der Verbrennungsluft verringert und somit die Verbrennungsbedingungen, insbesondere der Verbrennungsverlauf, verbessert und damit die Rußpartikelentstehung reduziert werden. Weiterhin kann auch durch zusätzliches Einblasen von Verbrennungsbeschleunigern eine Verbesserung des Verbrennungsverlaufes erreicht werden. Durch diese Maßnahmen kann die Rußemission des Dieselmotors, auch von Mehrstoffdieselmotoren erheblich reduziert werden. Auf einen Partikelfilter kann verzichtet werden bzw. kann dieser wesentlich kleiner dimensioniert und damit kostengünstiger ausfallen. Die gesetzlich vorgeschrieben Abgasuntersuchung kann entfallen, da die Abgasuntersuchung vom Sensor permanent durchgeführt wird. Durch eine Verringerung der eingespritzten Kraftstoffmenge und/oder durch entsprechende Gestaltung der Verbrennungsbedingungen, insbesondere des Verbrennungs-verlaufs, kann die Rußentstehung, die durch unvollständige Verbrennung des Kraftstoffes hervorgerufen wird, weitgehend unterbunden werden. Zugleich wird der Kraftstoff effizienter genutzt und führt zu einem verringerten Verbrauch. Der Verschleiß einzelner Einspritzdüsen/Injektoren kann erkannt und durch eine Kontrollleuchte signalisiert werden. Die Einspritzmenge und/oder die anderen Verbrennungsbedingungen werden, soweit notwendig, nur für den betreffenden Zylinder reduziert und/oder verändert, der Fehler im Fehlerspeicher registriert und aus dem fehlerhaften Injektor resultierende Motorschäden vermieden. Das Einspritzsystem mit Partikelsensorik für Brennkraftmaschinen, insbesondere Dieselmotoren, ermöglicht für jeden Zylinder die bezüglich Rußentstehung, Kraftstoffverbrauch und Zustand der Injektoren optimale Einspritzmenge und/oder die optimale Gestaltung der Verbrennungsbedingungen, insbesondere des Verbrennungsverlaufs und verringert dadurch Ablagerungen sowie erhöhten Verschleiß. Infolge dessen erhöht sich die Lebensdauer der Einzelkomponenten und des Motors insgesamt.

Vorteilhafte Ausführungsbeispiele des Verfahrens zur Regelung eines Einspritzsystems für Brennkraftmaschinen, insbesondere Dieselmotoren, ergeben sich aus den Ansprüchen 2 bis 9 und vorteilhafte Ausführungsbeispiele des Aufbaues des geregelten Einspritzsystems ergeben sich aus den Ansprüchen 11 bis 19.
Die Weiterbildung nach Anspruch 2 beschreibt die Veränderung der Verbrennungsbedingungen, die gemeinsam mit der Einspritzmenge die Vollständigkeit der Verbrennung und damit die Rußentstehung beeinflussen. Die Änderung der Verbrennungsbedingungen, insbesondere des Verbrennungsverlaufs, kann ggf. in Abhängigkeit anderer Parameter, wie z.B. Leistungsanforderung, gemeinsam mit der Verringerung der Einspritzmenge zu einer vollständigen Verbrennung und damit Minimierung der Rußpartikelentstehung beitragen. Die Verbrennungsbedingungen, insbesondere der Verbrennungsverlauf, können durch die zusätzliche Sauerstoffzufuhr, realisiert durch Ladedruckänderung, insbesondere Ladedruckerhöhung, zusätzliche Frischluft- bzw. Sauerstoffeinblasung, Führung des Verbrennungsluftstromes über einen Molekularfilter und damit Verringerung des Stickstoffanteils in der Verbrennungsluft verbessert werden. Gleichfalls kann der Verbrennungsverlauf durch Verbrennungsbeschleuniger optimiert werden.
Bei Weiterbildung nach Anspruch 3 kann die Trübungsmessung und die daraus resultierende Steuerung der Einspritzmenge des Kraftstoffes und/oder die Änderung des Ladedrucks und/oder die zusätzliche Frischluft- bzw. Sauerstoffeinblasung und/oder die Verbrennungsluftansaugung über einen Molekularfilter und/oder durch zusätzliche Einspritzung von Verbrennungsbeschleunigern zylinderspezifisch erfolgen. So kann jeder Zylinder mit der für die Verbrennung optimalen Kraftstoffmenge versorgt und/oder die Verbrennung zylinderspezifisch optimiert werden. Damit lassen sich auch unterschiedliche Verbrennungsbedingungen infolge von Verschleißerscheinungen an den Einspritzdüsen/Injektoren berücksichtigen. Die Weiterbildung nach Anspruch 4 ermöglicht die Kalibrierung des Systems und korrigiert mögliche Fehler z.B. durch Alterung oder Verschmutzung der Sensoren. Damit wird eine korrekte Trübungsmessung und eine korrekte Ansteuerung der Einspritzpumpe bzw. der CDI -Injektoren oder Pumpe-Düse-Elemente gewährleistet. Darüber hinaus werden Fehler bei der Kalibrierung des Sensors im Kombiinstrument angezeigt und/oder im Fehlerspeicher registriert und geben dem Fahrzeugführer bzw. dem Werkstattmeister entsprechende Hinweise. Bei Weiterbildung nach Anspruch 5 werden die permanente Überschreitung des zulässigen Trübungswertes, die dauerhafte Unterschreitung einer Mindesteinspritzmenge und andere Fehler angezeigt und im Fehlerspeicher registriert. Damit erhalten Fahrzeugführer und Werkstattmeister entsprechende Hinweise bezüglich der Funktion des Einspritzsystems und des Zustandes der Einspritzdüsen. Die Weiterbildung nach Anspruch 6 sichert durch Einschränkung der Weiternutzbarkeit des Fahrzeugs, dass die Wiederherstellung der Funktion des Systems durch den Fahrzeugführer veranlasst werden muss und verhindert so einen Dauerbetrieb des Motors mit erhöhtem Rußausstoß. Bei Weiterbildung nach Anspruch 7 ermöglicht die variable Einstellung des zulässigen Maximalwerts für Rußpartikelemission die Anpassung beispielsweise an unterschiedliche Abgasnormen und Fahrzeugtypen. Die Weiterbildung nach Anspruch 8 ermöglicht die Auswertung der Drehungleichförmigkeit der einzelnen Arbeitstakte mit dem zugeordneten Rußpartikelausstoß in einem in der Motorsteuerung hinterlegten Kennfeld und steuert die entsprechend zugeordnete Einspritzdauer und/oder die Verbrennungsbedingungen, insbesondere den Verbrennungsverlauf, durch Ansteuerung der entsprechenden Aggregate. Bei der Weiterbildung nach Anspruch 9 löst ein Türkontaktschalter bei der Motorsteuerung einen Nullabgleich des Sensors aus und macht somit die Trübungsmessung kalibrierbar. Der Startvorgang des Motors ist erst durchführbar, wenn der erfolgreiche Nullabgleich des Sensors durch die Motorsteuerung erfasst ist und den Startvorgang frei gibt.

Bei Weiterbildung nach Anspruch 11 besitzt die Motorsteuerung zusätzliche Komponenten. Die Verbrennungsbedingungen können hierdurch zusätzlich oder alternativ so beeinflusst werden, dass die Motorsteuerung die anderen Aggregate entsprechend so ansteuert, dass die Verbrennung optimiert wird. Damit werden weitere Optionen zur Verringerung der Rußentstehung eingeschlossen. So kann auf verschiedene Weise der zur Verbesserung der Verbrennung notwendige zusätzliche Sauerstoff in den Verbrennungsraum eingebracht werden. Eine andere Möglichkeit zur Optimierung der Verbrennung und Verringerung der Rußentstehung ist die Zufuhr von Verbrennungsbeschleunigern. Die Weiterbildung nach Anspruch 12 beschreibt die zylinderspezifische Anordnung des Trübungssensors und in Verbindung mit Motorsteuerung und Einspritzpumpe die zylinderselektive Steuerung der Einspritzmenge und/oder der Aggregate, die die Verbrennungsbedingungen, insbesondere den Verbrennungsverlauf, positiv beeinflussen können. Damit können entsprechend der Verbrennungsbedingungen in jedem einzelnen Zylinder entsprechende Mengen eingespritzt und/oder die Zufuhr von Verbrennungssauerstoff erhöht bzw. Verbrennungsbeschleuniger zugeführt werden. Die Weiterbildung nach Anspruch 13 ermöglicht durch die Kühlung den Schutz des Sensors vor Überhitzung. Dies ist vor allem bei Motoren mit Turboladern oder Kompressoren erforderlich, bei denen sehr hohe Temperaturen am Abgasaustritt auftreten. Bei Weiterbildung nach Anspruch 14 ist der Sensor als Lasersonde ausgeführt. Damit ist im Gegensatz zur Opaziemethersonde kein Vorheizen erforderlich und die Einsatzbereitschaft schneller hergestellt. Die Zeitverzögerung des Messverfahrens wird deutlich verkürzt und die Anpassung der Einspritzmenge an den Betriebszustand deutlich verbessert. Die Weiterbildung nach Anspruch 15 erlaubt die Anzeige der dauerhaften Überschreitung der zulässigen Partikelemission am Kombiinstrument und gibt damit dem Fahrer den Hinweis, den Fehler zu beheben. Die Weiterbildung nach Anspruch 16 ermöglicht die Kalibrierung des Systems und korrigiert mögliche Fehler z.B. durch Alterung oder Verschmutzung der Sensoren. Die Kalibrierung wird durch einen Türkontaktschalter ausgelöst. Die Zeitverzögerung für den Starvorgang wird entsprechend reduziert bzw. entfällt. Bei der Weiterbildung nach Anspruch 17 wird im Kombiinstrument der erfolgreiche Abschluss der Kalibrierung des Sensors angezeigt und danach der Startvorgang ermöglicht. Dadurch wird sichergestellt, dass das geregelte Einspritzsystem für Dieselmotoren mit Partikelsensorik auch optimal funktioniert. Die Fehlfunktion des Systems bzw. eine übermäßige Verschmutzung des Sensors wird durch Weiterbildung nach Anspruch 18 auf dem Kombiinstrument zur Anzeige gebracht und gibt dem Fahrer einen Hinweis auf erforderliche Überprüfung und Wiederherstellung der Funktion des Einspritzsystems. Die Freigabe des Startvorganges sichert die Weiternutzbarkeit des Fahrzeugs. Bei der Weiterbildung nach Anspruch 19 ist das geregelte Einspritzsystem für Dieselmotoren mit Partikelsensorik auch zur Nachrüstung verfügbar.

Die Erfindung wird nachfolgend anhand der Zeichnung näher erläutert. Es zeigen:

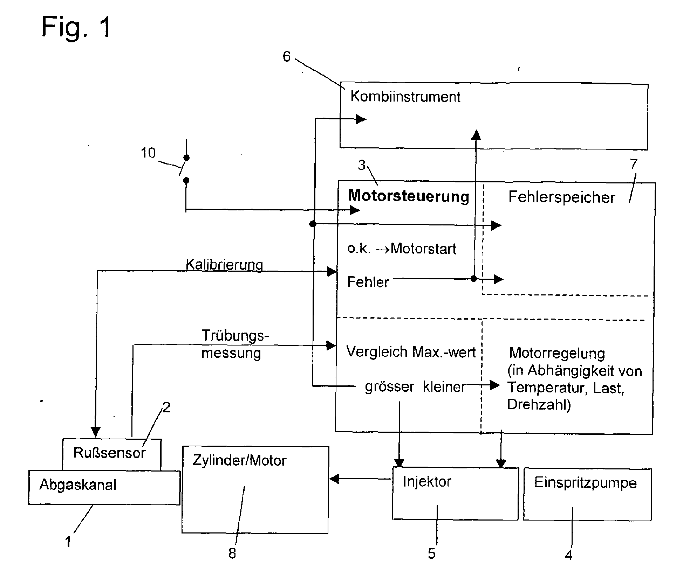

Fig. 1 die Verfahrensschritte zur Regelung der Brennkraftmaschine und

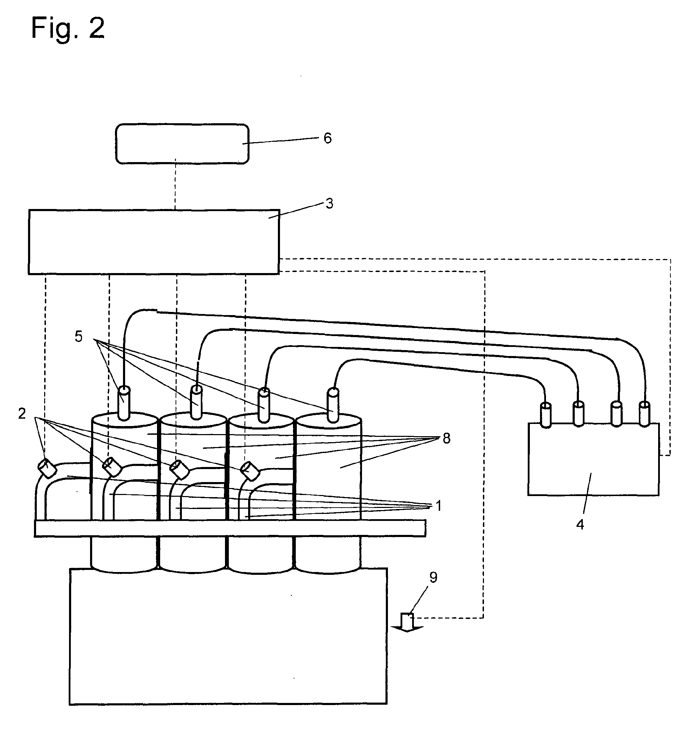

Fig. 2 die Anordnung der Funktionselemente des Regelungssystems.
Das Einspritzsystem mit Partikelsensorik für Brennkraftmaschinen, insbesondere Dieselmotoren, und das dazugehörige Verfahren zeichnet sich dadurch aus, dass ein im Abgaskanal 1 des jeweiligen Zylinders angeordneter Sensor 2 die Trübung des Abgasstromes erfasst. Durch Wandlung in eine elektrische Größe wird der Wert von der Motorsteuerung 3 mit dem zulässigen Maximalwert verglichen und bei Überschreiten des maximal zulässigen Trübungswertes durch Ansteuerung der Einspritzpumpe 4 und oder der Einspritzdüse 5, die durch diese eingespritzte Kraftstoffmenge soweit reduziert, bis die vom Sensor 2 erfasste Trübung des Abgases unterhalb des zulässigen Maximalwertes bleibt und die Einspritzmenge im Weiteren wieder auf die übliche Weise temperatur-, last- und drehzahlabhängig erfolgt.

Die Reduzierung der Einspritzmenge kann ergänzt bzw. ersetzt werden durch Ansteuerung anderer Aggregate, die die Verbrennungsbedingungen so beeinflussen, dass weniger Rußpartikel entstehen, welche aus unvollständiger Verbrennung des Kraftstoffs resultieren. Es kann auf verschiedene Weise der zur Verbesserung der Verbrennung notwendige zusätzliche Sauerstoff in den Verbrennungsraum eingebracht werden. Die zusätzliche Sauerstoffzufuhr kann durch Änderung, insbesondere Erhöhung des Ladedrucks, z.B. durch entsprechende Ansteuerung des Turboladers bzw. Kompressors erreicht werden. Beispielsweise ist dies durch die veränderte Stellung der Leitschaufeln des Turboladers oder durch das Regelungsventil des Turboladers bzw. Kompressors realisierbar. Ebenso ist durch zusätzliche Frischluft- oder Sauerstoffeinblasung in den Brennraum eine vollständigere und somit bessere Verbrennung erzielbar. Durch Umschaltung des Verbrennungsluftstromes über eine Molekularfiltereinheit kann der Stickstoffanteil der Verbrennungsluft verringert werden und somit können die Verbrennungsbedingungen, insbesondere der Verbrennungsverlauf, verbessert und die Rußpartikelentstehung reduziert werden.

Auch durch zusätzliche Einblasung von Verbrennungsbeschleunigern kann eine Verbesserung des Verbrennungsverlaufes erreicht werden. Durch diese Maßnahmen kann die Rußemission des Dieselmotors erheblich reduziert werden. Auf einen Partikelfilter kann verzichtet werden bzw. kann dieser wesentlich kleiner dimensioniert und damit kostengünstiger ausfallen.

Die Kalibrierung des oder Sensoren 2 über Türkontaktschalter ausgelöst werden. Ein Türkontaktschalter 10 ist elektrisch mit der Motorsteuerung 3 verbunden. Bei Betätigung des Türkontaktschalters 10 wird über die Motorsteuerung 3 einen Nullabgleich des Sensors 2 auslöst und somit die Trübungsmessung kalibrierbar gemacht. Der Startvorgang des Motors ist erst durchführbar, wenn der erfolgreiche Nullabgleich des Sensors 2 durch die Motorsteuerung 3 erfasst ist und den Startvorgang frei gibt. Eine oder mehrere Kontrollleuchte(n) zeigen im Kombiinstrument 6 den entsprechenden Zustand an.

Die gesetzlich vorgeschriebene Abgasuntersuchung kann entfallen, da die Abgasuntersuchung vom Sensor permanent durchgeführt wird. Durch eine Verringerung der eingespritzten Kraftstoffmenge und/oder Gestaltung der Verbrennungsbedingungen kann die Rußentstehung, die durch unvollständige Verbrennung des Kraftstoffes hervorgerufen wird, weitgehend unterbunden werden. Zugleich wird der Kraftstoff effizienter genutzt und führt zu einem verringerten Verbrauch. Der Verschleiß einzelner Einspritzdüsen/Injektoren kann erkannt und durch eine Kontrollleuchte signalisiert werden. Die Einspritzmenge und/oder die Verbrennungsbedingungen, insbesondere der Verbrennungsverlauf, werden soweit notwendig nur für den betreffenden Zylinder reduziert bzw. verändert, der Fehler im Fehlerspeicher registriert und aus dem fehlerhaften Injektor resultierende Motorschäden vermieden. Das Einspritzsystem mit Partikelsensorik für Brennkraftmaschinen, insbesondere Dieselmotoren, ermöglicht für jeden Zylinder die bezüglich Rußentstehung, Kraftstoffverbrauch und Zustand der Injektoren optimale Einspritzmenge und/oder optimierte Gestaltung der Verbrennungsbedingungen, insbesondere des Verbrennungsverlaufs, und verringert dadurch Ablagerungen sowie erhöhten Verschleiß. Infolge dessen erhöht sich die Lebensdauer der Einzelkomponenten und des Motors insgesamt.

Die Vorrichtung wurde wie folgt realisiert. Der Motor ist ein Common-Rail-Motor. Die Sensoren 2 sind in jeden einzelnen, mit dem Zylinder 8 verbundenen Abgaskanal 1 vor dem Sammelabgaskanal, eingeschraubt. Dabei finden Lasersensoren 2, wie aus der Medizintechnik bekannt Verwendung. Durch elektrische Kabel ist jeder Sensor 2 mit der Motorsteuerung 3 verbunden. Die Motorsteuerung 3 ist um ein Modul erweitert, dass das elektrische Signal des Sensors 2 auswertet, indem es insbesondere das elektrische Signal mit einem dem maximalen Trübungswert zugeordneten Wert vergleicht und bei Überschreiten des Signals durch die Ansteuerung des dem entsprechenden Zylinder 8 zugeordneten Injektors 5 dessen Öffnungszeit verkürzt und damit indirekt eine reduzierte Kraftstoffmenge in den entsprechenden Zylinder 8 eingespritzt wird. Der maximale Trübungswert ist an der Motorsteuerung 3 durch ein verändertes Kennfeld den gesetzlichen Vorschriften oder den Motorparametern entsprechend einstellbar. In diesem Beispiel erfolgt eine zylinderselektive Steuerung der Einspritzmenge. Durch Verschaltung des Moduls mit dem Fehlerspeicher 7 der Motorsteuerung 3 und dem Kombiinstrument 6 werden Fehlfunktionen signalisiert.

Das Modul veranlasst, von einem Türkontaktschalter 10 ausgelöst, die Kalibrierung des Systems, insbesondere der Sensoren 2. Nach erfolgreicher Kalibrierung wird der Startvorgang durch die Motorsteuerung 3 freigegeben. Die wiederholt erfolglose Kalibrierung ermöglicht den Startvorgang des Motors ohne Partikelsensorsteuerung. In diesem Fall wird der Fehler in den Fehlerspeicher 7 der Motorsteuerung 3 eingetragen und nach einer programmierten Dauer die Motorsteuerung veranlasst, den Motor im Notlaufprogramm nur noch leistungs- bzw. geschwindigkeitsreduziert zu betreiben.

Eine andere Ausführung der Vorrichtung erfolgt in Pumpe-Düse-Motoren. Die Sensorik entspricht der im vorherigen Beispiel. Bei Überschreiten des zulässigen Rußausstoßes wird die Einspritzmenge über die Dauer der Öffnung der Rücklaufleitung reduziert.

Eine Variante der Ausführung der Vorrichtung ist dadurch realisiert, dass bei Überschreiten des zulässigen Trübungswertes die Motorsteuerung 3 eine Ladedruckerhöhung durch Ansteuerung des Turboladers bzw. des Kompressors veranlassen kann und dadurch die Verbrennungsbedingungen entsprechend verbessert werden und somit die Rußentstehung entsprechend verringert wird.

Bei einer weiteren Variante kann die Motorsteuerung 3 eine zusätzliche Frischluft- bzw. Sauerstoffeinblasung realisieren. Zur Einblasung von Frischluft in den Verbrennungsraum kann eine zusätzliche Sekundärluftpumpe vorgesehen sein oder die Sauerstoffeinblasung kann z.B. durch Öffnung eines entsprechenden Ventils eines Sauerstoffdruckbehälters realisierbar sein. Darüber hinaus kann in einer weiteren Variante der Ausführung der Vorrichtung die Motorsteuerung 3 im Bedarfsfall eine zusätzliche Einspritzung von Verbrennungsbeschleunigern separat bzw. zusammen mit dem Kraftstoff durch Ansteuerung einer entsprechenden Einspritzvorrichtung ermöglichen. Diese Einspritzvorrichtung kann beispielsweise durch eine Zusatzpumpe und/oder entsprechende Einspritzventile realisiert sein.

### Zusammenstellung der Bezugszeichen

- 1 -: Abgaskanal
- 2 -: Sensor
- 3 -: Motorsteuerung
- 4 -: Einspritzpumpe
- 5 -: Einspritzdüse
- 6 -: Kombiinstrument
- 7 -: Fehlerspeicher
- 8 -: Zylinder
- 9 -: Drehzahlsensor
- 10 -: Türkontaktschalter

## Patentansprüche

1. Verfahren zur Regelung eines Einspritzsystems für Brennkraftmaschinen,
**dadurch gekennzeichnet,**
**dass** ein im Abgaskanal (1) angeordneter Sensor (2) die durch Rußpartikel verursachte Trübung des Abgases erfasst, den Wert als elektrische Größe an eine Motorsteuerung (3) weiterleitet und die Motorsteuerung (3) bei Überschreiten des maximal zulässigen Trübungswertes durch Ansteuerung einer Einspritzpumpe (4) und/oder deiner Einspritzdüse (5), die durch diese eingespritzte Kraftstoffmenge soweit reduziert wird, bis die vom Sensor (2) erfasste Trübung des Abgases unterhalb des zulässigen Maximalwertes bleibt und die Einspritzmenge im Weiteren wieder auf die übliche Weise temperatur-, last- und drehzahlabhängig erfolgt.

2. Verfahren nach Anspruch 1
**dadurch gekennzeichnet,**
**dass** bei Überschreiten der Abgastrübung - durch die Motorsteuerung (3) veranlasst - zusätzlich oder anstelle der Kraftstoffmengenreduzierung
a) durch Ansteuerung eines Turboladers bzw. eines Kompressors eine Änderung, insbesondere Erhöhung des Ladedrucks, erfolgt und/oder
b) durch Ansteuerung einer Sekundärluftpumpe zusätzliche Frischluft bzw. durch Öffnung eines Ventils aus einem Sauerstoffdruckbehälter zusätzlich Sauerstoff in den Brennraum eingeblasen wird und/oder
c) die Verbrennungsluftansaugung ganz oder teilweise über einen Molekularfilter geführt wird und/oder
d) eine zusätzliche Einspritzung von Verbrennungsbeschleunigern erfolgt
und damit die Verbrennungsbedingungen solange positiv beeinflusst werden, bis die vom Sensor (2) erfasste Trübung des Abgases unterhalb des zulässigen Maximalwertes bleibt.

3. Verfahren nach Anspruch 1 und 2
**dadurch gekennzeichnet,**
**dass** die Trübungsmessung zylinderspezifisch erfolgt und bei Überschreiten des zulässigen Trübungswertes eine Reduzierung der Einspritzmenge und/oder eine Änderung des Ladedrucks und/oder eine zusätzliche Frischluft- bzw. Sauerstoffeinblasung und/oder die Verbrennungsluftansaugung über einen Molekularfilter und/oder durch zusätzliche Einspritzung von Verbrennungsbeschleunigern entsprechend zylinderspezifisch erfolgt.

4. Verfahren nach Anspruch 1 bis 3
**dadurch gekennzeichnet,**
**dass** in regelmäßigen Abständen zur Kalibrierung des Sensors (2) von der Motorsteuerung (3) veranlasst ein Nullabgleich erfolgt und nach erfolgreichem Abschluss die Motorsteuerung (3) den Startvorgang freigibt und bei nicht erfolgreichem Nullabgleich der Fehler im Kombiinstrument (6) angezeigt und/oder im Fehlerspeicher (7) der Motorsteuerung (3) registriert wird.

5. Verfahren nach Anspruch 1 bis 4
**dadurch gekennzeichnet,**
**dass** die dauerhafte Überschreitung des zulässigen Trübungswertes, die dauerhafte Unterschreitung einer Mindesteinspritzmenge für einen Zylinder (8) und andere Abweichungen von der optimalen Arbeitsweise des Einspritzsystems im Kombiinstrument (6) angezeigt und/oder im Fehlerspeicher (7) der Motorsteuerung (3) registriert werden.

6. Verfahren nach Anspruch 1 bis 5
**dadurch gekennzeichnet,**
**dass** bei permanenter Überschreitung des maximalen Trübungswertes oder anderer regelmäßig auftretender Fehler nach einer bestimmten Dauer die Motorsteuerung (3) den Motor in einem Notlaufprogramm mit beschränkter Leistung und/oder Geschwindigkeit betreibt.

7. Verfahren nach Anspruch 1 bis 6
**dadurch gekennzeichnet,**
**dass** der zulässige Maximalwert für Rußpartikelemission in der Motorsteuerung (3) einstellbar bzw. programmierbar ist.

8. Verfahren nach Anspruch 1 bis 7
**dadurch gekennzeichnet,**
**dass** ein Drehzahlsensor (9) die Drehungsgleichförmigkeit der einzelnen Zylinder (8) durch Ermittlung der Dauer der jeweiligen aufeinanderfolgenden Arbeitstakte der Zylinder (8) ermittelt, mit dem vom Drehzahlsensor (9) erfassten, dem Arbeitstakt zugeordneten Rußausstoß vergleicht und über eine in einem Kennfeld hinterlegte Funktion bzw. Abhängigkeit entsprechend die Kraftstoffmenge über die Einspritzdauer reduziert und/oder eine Änderung des Ladedrucks und/oder die zusätzliche Frischluft- bzw. Sauerstoffeinblasung und/oder die Verbrennungsluftansaugung über einen Molekularfilter erfolgt und/oder zusätzlich Verbrennungsbeschleuniger eingespritzt werden.

9. Verfahren nach Anspruch 1 bis 8,
**dadurch gekennzeichnet,**
**dass** ein Türkontaktschalter (10) bei der Motorsteuerung (3) einen Nullabgleich des Sensors (2) auslöst und somit die Trübungsmessung kalibrierbar macht und dass der Startvorgang des Motors erst durchführbar ist, wenn der erfolgreiche Nullabgleich des Sensors (2) durch die Motorsteuerung (3) erfasst ist und den Startvorgang frei gibt, wobei eine oder mehrere Kontrollleuchte(n) im Kombiinstrument (6) den entsprechenden Zustand anzeigt.

10. Geregeltes Einspritzsystem mit Partikelsensorik für Brennkraftmaschinen,
**dadurch gekennzeichnet,**
**dass** im Abgas.kanal (1) ein Sensor (2) angeordnet ist, der durch Trübungsmessung den Rußpartikelausstoß ermittelt und in elektrische Signale umwandelt und über elektrische Kabel mit einem Motorsteuergerät (3) verbunden ist und an dieses die elektrischen Signale weiterleitet, so dass die Einspritzpumpe (4) oder die Einspritzdüse(n) (5) durch die Motorsteuerung (3) so ansteuerbar sind, dass die durch die Einspritzdüse(n) (5) eingespritzte Menge des Kraftstoffes reduzierbar ist, bis der Rußpartikelausstoß den vorgegebenen zulässigen Trübungswert einhält.

11. Geregeltes Einspritzsystem nach Anspruch 10,
**dadurch gekennzeichnet,**
**dass** die Motorsteuerung (3) folgende Zusatzkomponenten besitzt:
a) über eine Ansteuerung des Turboladers bzw. des Kompressors eine Ladedruckänderung, insbesondere eine Ladedruckerhöhung, durchführbar ist und/oder
b) eine Sekundärluftpumpe zur zusätzlichen Frischlufteinblasung aktivierbar ist und/oder
c) ein Ventil ansteuerbar ist, um aus einem Sauerstoffdruckbehälter eine zusätzliche Sauerstoffeinblasung in den Brennraum zu ermöglichen und/oder
d) ein Stellventil ansteuerbar ist und so der Verbrennungsluftstrom über einen Bypass mit Molekularfilter führbar ist und/oder
e) eine zusätzliche Einspritzeinrichtung ansteuerbar ist und damit zusätzlich ein Verbrennungsbeschleuniger in den Brennraum einspritzbar ist.

12. Geregeltes Einspritzsystem nach Anspruch 10 und 11,
**dadurch gekennzeichnet,**
**dass** im Abgaskanal (2) eines jeden Zylinders (8) ein Sensor (2) angeordnet ist und die Einspritzmenge für jeden Zylinder (8) spezifisch reduzierbar und/oder die Änderung des Ladedrucks und/öder die'zusätzliche Frischluft- bzw. Sauerstoffeinblasung und/oder die Verbrennungsluftansaugung über einen Molekularfilter und/oder durch zusätzliche Einspritzung von Verbrennungsbeschleunigern zylinderspezifisch veränderbar ist.

13. Geregeltes Einspritzsystem nach den Ansprüchen 10 bis 12,
**dadurch gekennzeichnet,**
**dass** der Sensor (2) flüssigkeits- oder luftgekühlt.ist, wobei die Motorkühlung oder eine zusätzliche Kühlung nutzbar ist.

14. Geregeltes Einspritzsystem nach den Ansprüchen 10 bis 13,
**dadurch gekennzeichnet,**
**dass** der Sensor (2) eine Lasersonde oder ein anderer optisch-elektronischer Partikeldurchflussmesser ist.

15. Geregeltes Einspritzsystem nach den Ansprüchen 10 bis 14,
**dadurch gekennzeichnet,**
**dass** dauerhaftes Überschreiten des zulässigen Wertes der Partikelemission durch eine Kontrollleuchte im Kombiinstrument (7) signalisierbar ist.

16. Geregeltes Einspritzsystem nach den Ansprüchen 10 bis 15,
**dadurch gekennzeichnet,**
**dass** ein Türkontaktschalter (10) gekoppelt mit der Motorsteuerung (3) einen Nullabgleich des Sensors (2) auslösbar macht und somit die Trübungsmessung kalibrierbar ist.

17. Geregeltes Einspritzsystem nach den Ansprüchen 10 bis 16,
**dadurch gekennzeichnet,**
**dass** der Startvorgang des Motors erst durchführbar ist, wenn der erfolgreiche Nullabgleich des Sensors (2) durch die Motorsteuerung (3) erfasst ist und den Startvorgang frei gibt, wobei eine Kontrollleuchte im Kombiinstrument (6) den entsprechenden Zustand anzeigt.

18. Geregeltes Einspritzsystem nach den Ansprüchen 10 bis 17,
**dadurch gekennzeichnet,**
**dass** eine Fehlfunktion oder der Ausfall des Sensors (2) durch eine Kontrollleuchte im Kombiinstrument (6) signalisierbar und der Motor ohne die Partikelsensorik startbar ist.

19. Geregeltes Einspritzsystem nach den Ansprüchen 10 bis 18,
**dadurch gekennzeichnet,**
**dass** das Einspritzsystem für in Betrieb befindliche Brennkraftmaschinen, insbesondere Dieselmotoren, durch Austausch oder Aufrüstung der Motorsteuerung (3) und Einbau der Sensoren (2) nachrüstbar ist.
